# EUROPEAN PATENT APPLICATION

(11) **EP 2 642 091 A1**
(43) Date of publication of application: **25.09.2013**
(21) Application number: 12160776.6
(22) Date of filing: 22.03.2012
(51) Int. Cl.: F01K 23/10

(54) **Combined cycle power plant**

(71) Applicant: Siemens Aktiengesellschaft, 80333 München (DE)
(72) Inventor: Barkowski, David, 47058 Duisburg (DE)

(57) **Abstract**

A combined cycle power plant is presented. The combined cycle power plant (1, 30) includes a steam turbine (10, 50) having at least a low pressure part (50b) and a high pressure part (50a), a gas turbine (2, 32) having an exhaust gas side (5, 35), a heat recovery steam generator (8, 38, 40) operatively coupled to the steam turbine (10, 50) and the gas turbine (2, 32), wherein the heat recovery steam generator (8, 38, 40) is located downstream of the gas turbine (2, 32) on the exhaust gas side (5, 35), and an intercooler (20) for cooling a gas between a plurality of compressors (4, 6, 34, 36) of the gas turbine (2, 32) by extracting heat from the gas and utilizing the heat to preheat a condensate for the steam turbine (10, 50).

## Description

The present invention relates to a combined cycle power plant.

Combined cycle power plants are electrical power plants employing gas turbines and steam turbines, which are used in combination to generate power with high efficiency. The heat contained in the expanded working medium from the gas turbine is utilized in order to generate steam for the steam turbine. Heat transmission takes place in a heat recovery steam generator which is downstream of the gas turbine and in which heating surfaces in the form of tubes or tube bundles are disposed. Those heating surfaces, in turn, are connected into a water/steam circuit of the steam turbine. The water/steam circuit includes one or more, for example two or three, pressure stages. Each pressure stage conventionally has a preheater, an evaporator and a superheater.

The gas turbine in the combined cycle power plant includes an intercooler between the compressor stages to decrease the work required to compress a gas between the specified pressures. Intercooling by an external heat exchanger leads to significant reduction of compressor energy, because the density of the gas increases after cooling and the energy needed for compression of the gas decreases. Consequently the shaft output increases. A disadvantageous result is the increased amount of fuel needed as the gas is heated from a lower starting temperature. The effect is a generally lower efficiency, because the externally released heat from the intercooler has to be regarded as waste heat. This effect can be compensated by reducing the temperature not by an external heat exchanger but by evaporation of water during compression which is referred to as "wet compression".

In wet compression water is added to the compressor air, as a result of which the temperature of the air is reduced, while vaporizing the water at the same time, and allowing these vapors to expand together with the air in the turbine. As a result, the energy is retained in the process and is not given up to the environment, however, correspondingly large quantities of de-ionized water are consumed, which is why wet compression is used mostly for short term increase in efficiency.

Furthermore, during wet compression the gas turbine is impacted with water vapor, thus posing a risk of erosion, which requires customizing of various parts of the gas turbine, such as using a vapor resistant material or coating.

It is therefore an object of the present invention to utilize the heat which is removed from the compressor to increase the efficiency of the steam turbine in the combined cycle power plant.

The object is achieved by providing a combined cycle power plant according to claim 1 and a method for operating the combined cycle power plant according to claim 11.

A combined cycle power plant includes a steam turbine having at least a high pressure part and a low pressure part and a gas turbine having an exhaust gas side, a heat recovery steam generator operatively coupled to the steam turbine and the gas turbine and an intercooler for cooling a gas between a plurality of compressor of the gas turbine by extracting heat from the gas and utilizing the heat to preheat a condensate for the steam turbine. By utilizing the heat released between the compressor to preheat the condensate the capacity of the compressor is decreased thereby increasing the shaft output. Additionally, the output from the steam turbine is increased by realizing a higher mass flow and/or shifting mass flow between the pressure parts in a multi-pressure arrangement of the steam turbine.

In one embodiment, the condensate is supplied to the intercooler by a feed water pump. The feed water pump provides a desired pressure to the condensate for heating in the intercooler.

In one embodiment, the intercooler is located between a second compressor and first compressor to decrease the work required to compress the gas between two specified pressures.

In another embodiment, the first compressor is a low pressure compressor and the second compressor is a high pressure compressor to enable further compression of the gas before it is sent to a combustor of the gas turbine.

In one embodiment, the heat recovery steam generator is configured to produce steam from the heat supplied to the condensate by the intercooler, which enables a higher mass flow rate in the steam turbine due to a higher inlet temperature of the condensate.

In one embodiment, the high pressure part of the steam turbine is connected to a second heat recovery steam generator, such an arrangement allows producing steam at different pressure levels.

In one embodiment, a generator is connected to a shaft on the gas turbine towards an exhaust side which enables producing electrical power.

In another embodiment, the exhaust gas from the gas turbine is directed into the heat recovery steam generator to produce steam to be directed to the steam turbine.

In one embodiment, the feed water pump comprises an arrangement for controlling an amount of condensate directed to the intercooler. This enables preheating only the requisite amount of condensate required for operating the steam turbine.

In one embodiment, the heat recovery steam generator is configured to further heat the condensate passing through the intercooler which enables the output of the steam turbine to be increased by realizing a higher mass flow in total and/or shifting mass flow between the different pressure levels in a multi-pressure arrangement.

The above-mentioned and other features of the invention will now be addressed with reference to the accompanying drawings of the present invention. The illustrated embodiments are intended to illustrate, but not limit the invention. The drawings contain the following figures, in which like numbers refer to like parts, throughout the description and drawings.
- FIG 1: is a schematic diagram of an exemplary combined power cycle plant,
- FIG 2: is a schematic diagram depicting another embodiment of the exemplary power cycle plant with multiple pressure arrangement,
- FIG 3: is a graphical illustration depicting a temperature-entropy diagram of the exemplary combined cycle power plant showing the amount of energy affected by due to the exemplary arrangement, in accordance with aspects of the present invention.

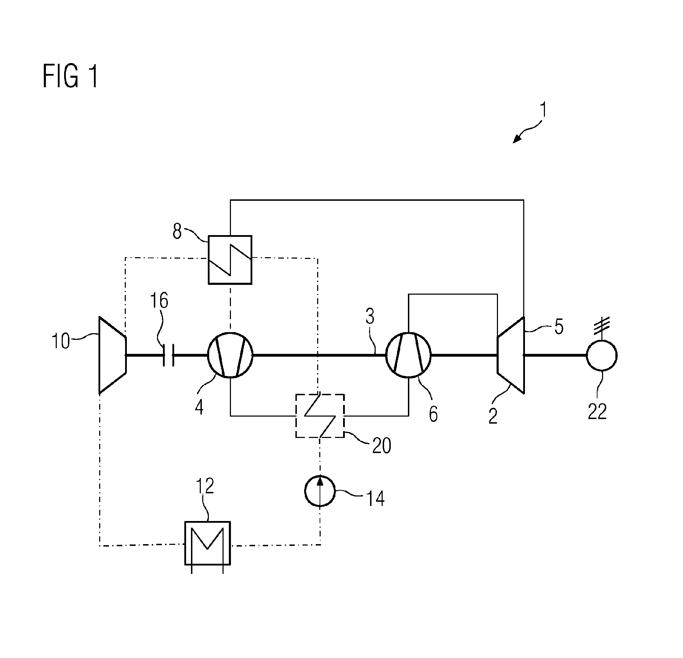

FIG 1 is a schematic diagram of a combined cycle power plant 1 which includes a gas turbine 2 and a steam turbine 10 as well as a heat recovery steam generator 8 through which a hot gas from an exhaust side 5 of the gas turbine 2 flows. The heat recovery steam generator 8 serves for steam generation for the steam turbine 10.

The gas turbine 2 includes one or more compressors, such as a first compressor 4 and a second compressor 6 coupled to the gas turbine 2. A generator 22 is operatively coupled to the gas turbine 2 through a shaft 3. More particularly, the generator 22 is coupled to the gas turbine 2 towards the exhaust side 5 through the shaft 3.

Although in the presently contemplated configuration a single gas turbine is depicted, it may be noted that a plurality of gas turbines may be present in a combined cycle power plant, such as for example two gas turbines or three gas turbines set up in a multi-shaft arrangement.

In accordance with aspects of the present technique, the steam turbine 10 is coupled to a water steam circuit wherein a condenser 12 following the steam turbine 10 is disposed.

Furthermore, the combined cycle power plant 1 includes an intercooler 20 disposed between the first compressor 4 and the second compressor 6 of the gas turbine. The intercooler 20 is configured to cool a gas by extracting heat from the gas between the first compressor 4 and the second compressor 6.

It may be noted that the first compressor 4 is a low pressure compressor and the second compressor 6 is a high pressure compressor. Additionally, more compressors may be employed in the gas turbine 2 for compression of the gas, which is ultimately fed into a combustor of the gas turbine 2.

The condenser 12 is located downstream of the steam turbine 10 and is connected to a feed water pump 14. The feed water pump 14 is configured to supply a condensate to the intercooler 20. The heat extracted by the intercooler 20 from the gas in between the first compressor 4 and the second compressor 6 is utilized to heat the condensate, which may be water for example.

Thereafter, the preheated condensate is directed to the heat recovery steam generator 8. The heat recovery steam generator 8 further heats the condensate to produce steam. It may be noted that the heat recovery steam generator 8 includes an evaporator (not shown) and a superheater (not shown) to produce steam by evaporating and superheating the condensate with the gas obtained from the exhaust side 5 of the gas turbine 2. The steam thus produced is directed to the steam turbine 10.

Furthermore, the feed water pump 14 may include an arrangement for controlling an amount of condensate directed to the intercooler 20. The arrangement may include valves and control unit having a processor to control the amount and supply of condensate to the intercooler 20.

In accordance with aspects of the present technique, the combined cycle power plant 1 includes a clutch 16 disposed between the common shaft 3 of the gas turbine 2 and steam turbine 10 to connect the gas turbine 2 and the steam turbine 10. The clutch 16 further provides operational flexibility for the steam turbine 10, which can be engaged or disengaged during start-up or simple cycle operation of the gas turbine 2.

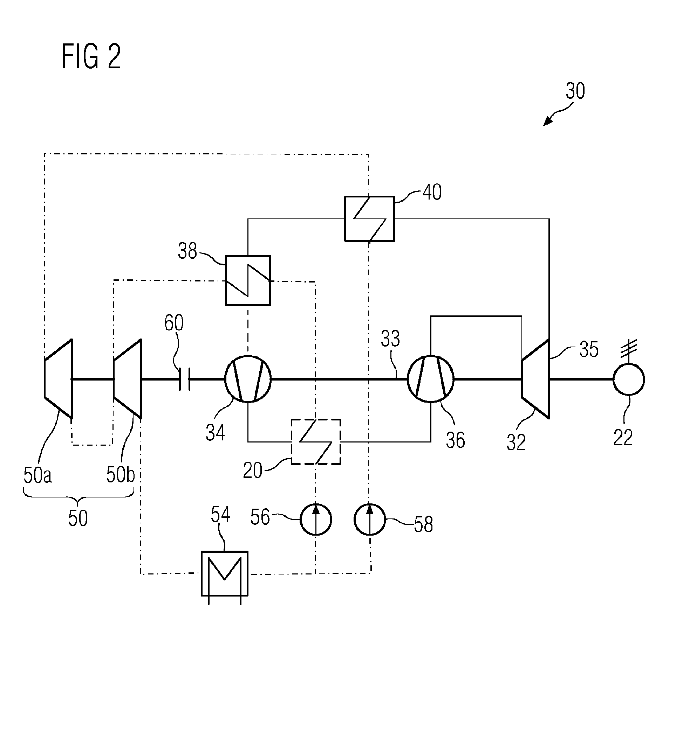

Referring now to FIG 2, another embodiment of the combined cycle power plant 30 is depicted. The depicted embodiment includes a gas turbine 32 with a plurality of compressors, such as a first compressor 34 which is a low pressure compressor and a second compressor 36 which is a high pressure compressor. A steam turbine 50 having a high pressure part 50a and a low pressure part 50b are connected to a common shaft 33 via a clutch 60. The depicted embodiment of the combined cycle power plant 30 is a multiple pressure arrangement of steam turbine 50 and may include a plurality of steam turbines referred to as "parts", for example two or three steam turbine operating at different pressures. These parts may be a low pressure part, a medium pressure part and a high pressure part for example.

The exemplary combined cycle power plant 30 includes a first heat recovery steam generator 38 and a second heat recovery steam generator 40. The first heat recovery steam generator 38 is operatively coupled to the low pressure part 50b of the steam turbine 50 and the second heat recovery steam generator 40 is operatively coupled to the high pressure part 50a of the steam turbine 50.

The heat recovery steam generators 38, 40 produce steam from the heat supplied by the gas from the exhaust side 35 of the gas turbine 32 by evaporating and superheating the gas.

An intercooler such as the intercooler 20 of FIG 1 is disposed between the first compressor 34 and the second compressor 36 of the gas turbine 32. As previously noted, the intercooler 20 extracts heat from the gas between the first compressor 34 and the second compressor 36, which are a low pressure compressor and a high pressure compressor respectively.

A first feed water pump 56 supplies condensate from a condenser 54 located downstream of the low pressure part 50b of the steam turbine 50 to the intercooler 20. The condensate is preheated by the intercooler 20 before it is led into the first heat recovery steam generator 38 which produces steam for supplying to the low pressure part 50b of the steam turbine 50.

A second feed water pump 58 supplies condensate to the second heat recovery steam generator 40 which in turn produces steam by evaporating and superheating the condensate by the hot gas from the exhaust side 35 of the gas turbine 32.

Power thus generated may be used to drive the generator 22 coupled to the gas turbine 32 through the shaft 33.

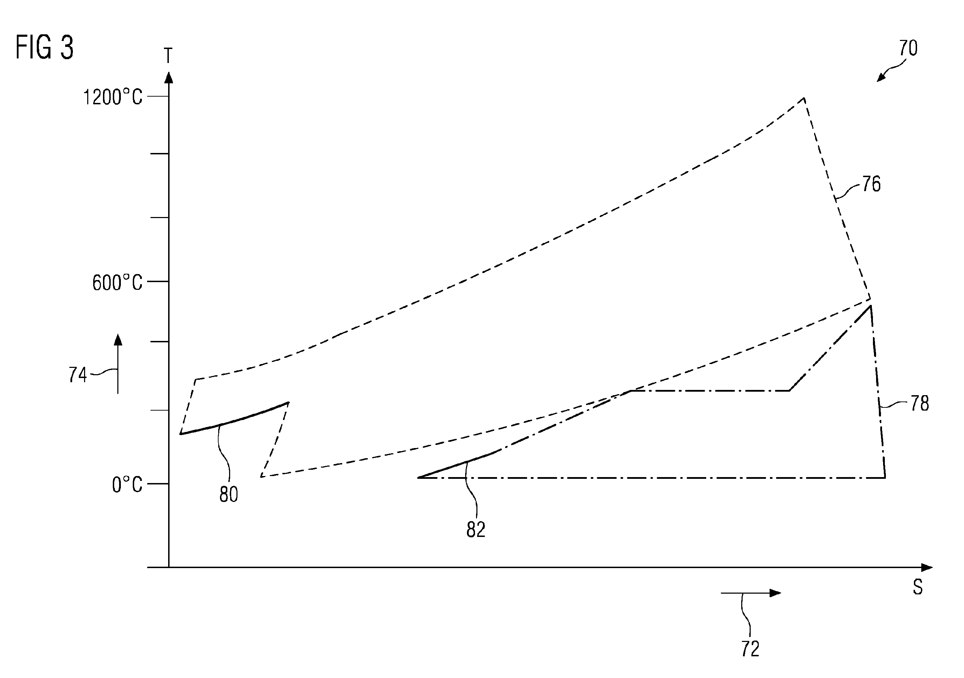

FIG 3 is a graphical illustration depicting a temperature entropy diagram 70 of the exemplary combined cycle power plant 1.

A horizontal axis 72 represents the entropy and a vertical axis 74 represents the temperature during the cycle. Reference numeral 76 is indicative of the change in entropy for the gas turbine during the cycle and reference numeral 78 is indicative of a change in entropy for the steam turbine during the cycle.

In accordance with aspects of the present technique the heat extracted from the gas between the first compressor and the second compressor of the gas turbine is not dissipated to the environment but utilized to preheat the condensate for the steam turbine. This heat is utilized for the steam turbine cycle. Reference numeral 80 is indicative of the energy extracted between the compressors by the intercooler 20 and the same amount of energy is utilized in the steam turbine cycle as indicated by reference numeral 82.

The present invention as described hereinabove has several advantages such as, but not limited to an increase in the efficiency of a combined cycle power plant. The intercooling of the gas in the gas turbine decreases compressor capacity and thus increases the shaft output. Additionally, the output of the steam turbine is also increased by realizing a higher mass flow in total and/or shifting mass flow between the different pressure levels in a multi-pressure arrangement.

Although the invention has been described with reference to specific embodiments, this description is not meant to be construed in a limiting sense. Various modifications of the disclosed embodiments, as well as alternate embodiments of the invention, will become apparent to persons skilled in the art upon reference to the description of the invention. It is therefore contemplated that such modifications can be made without departing from the embodiments of the present invention as defined.

## Claims

1. A combined cycle power plant (1, 30) comprising,
- a steam turbine (10, 50) having at least a low pressure part (50b) and a high pressure part (50a),
- a gas turbine (2, 32) having an exhaust gas side (5, 35),
- a heat recovery steam generator (8, 38, 40) operatively coupled to the steam turbine (10, 50) and the gas turbine (2, 32), wherein the heat recovery steam generator (8, 38, 40) is located downstream of the gas turbine (2, 32) on the exhaust gas side (5, 35), and
- an intercooler (20) for cooling a gas between a plurality of compressors (4, 6, 34, 36) of the gas turbine (2, 32) by extracting heat from the gas and utilizing the heat to preheat a condensate for the steam turbine (10, 50).

2. The combined cycle power plant (1, 30) according to claim 1,
wherein the condensate is supplied to the intercooler (20) by a feed water pump (14).

3. The combined cycle power plant (1, 30) according to claim 1 and 2,
wherein the intercooler (20) is located between a first compressor (4) and a second compressor (6).

4. The combined cycle power plant (1, 30) according to claim 3,
wherein the first compressor (4) is a low pressure compressor and the second compressor (6) is a high pressure compressor.

5. The combined cycle power plant (1, 30) according to any of the claims 1 to 4,
wherein the heat recovery steam generator (8) is configured to produce steam from the heat supplied to the condensate by the intercooler (20).

6. The combined cycle power plant (1, 30) according to any of the claims 1 to 5,
wherein the high pressure part (50b) of the steam turbine (50) is connected to a second heat recovery steam generator (40).

7. The combined cycle power plant (1, 30) according to any of the claims 1 to 6,
wherein a generator (22) is connected to a shaft (3, 33) on the gas turbine (2, 32) towards an exhaust side (5, 35).

8. The combined cycle power plant (1, 30) according to any of the claims 1 to 7,
wherein the exhaust gas from the gas turbine (2, 32) is directed into the heat recovery steam generator (8, 40).

9. The combined cycle power plant (1, 30) according to any of the claims 1 to 8,
wherein the feed water pump (14, 56) comprises an arrangement for controlling an amount of condensate directed to the intercooler (20).

10. The combined cycle power plant (1, 30) according to any of the claims 1 to 9,
wherein the heat recovery steam generator (14, 56) is configured to further heat the condensate passing through the intercooler (20).

11. A method for operating a combined cycle power plant (1, 30) comprising:
- cooling a gas between a plurality of compressors of a gas turbine (2, 32) by supplying a condensate through a feed water pump (14, 56),
- extracting heat from the gas through the condensate and directing the condensate to a heat recovery steam generator (8, 38, 40) to produce steam,
- directing the steam generated by the heat recovery steam generator to a steam turbine (10, 50).

12. The method according to claim 11,
further comprising controlling the flow of condensate in the intercooler (20) by the feed water pump (14, 56).

13. The method according to claim 11 and 12,
wherein the heated condensate is supplied to a low pressure part (50b) of the steam turbine (50).

14. The method according to any of the claims 11 to 13,
wherein a gas from an exhaust side (5, 35) of the gas turbine (2, 32) is directed to the heat recovery steam generator (8, 38, 40) to generate steam from the preheated condensate by evaporating and superheating.
